# EUROPÄISCHE PATENTANMELDUNG

(11) **EP 2 273 671 A2**
(43) Veröffentlichungstag der Anmeldung: **12.01.2011**
(21) Anmeldenummer: 10162911.1
(22) Anmeldetag: 17.05.2010
(51) Int. Cl.: H02P 29/00

(54) **Ermittlung einer Motortemperatur**

(30) Priorität: 09.07.2009 DE 102009032432
(71) Anmelder: Siemens Aktiengesellschaft, 80333 München (DE)
(72) Erfinder: Nolte, Uwe, 30890, Barsinghausen (DE); Krause, Uwe, 30982, Pattensen (DE); Sonntag, Guido, 30989, Gehrden (DE)

(57) **Zusammenfassung**

Die Erfindung betrifft ein Verfahren zur Ermittlung einer Temperatur eines Motors sowie ein System mit Mitteln zur Durchführung eines derartigen Verfahrens. Um die Motortemperatur zu ermitteln, wird vorgeschlagen, ohnehin vorhandene Mess- und Steuersignale als Eingangsgrößen für einen Beobachter zu verwenden, der aus diesen eine Motorkonstante oder den Wicklungswiderstand berechnet, woraus sich dann die Motortemperatur absolut bestimmen lässt.

## Beschreibung

Die Erfindung betrifft ein Verfahren zur Ermittlung einer Temperatur eines Motors sowie ein System mit Mitteln zur Durchführung eines derartigen Verfahrens.

Ein derartiges Verfahren kommt auf dem Gebiet der elektrischen Antriebe zum Einsatz. In elektrischen Antrieben ist es nahezu unvermeidlich, dass im Motor Wärmeverluste auftreten. Für den Motor gibt es eine obere Grenztemperatur, und wenn diese überschritten wird, kann der Motor ausfallen (z.B. aufgrund eines Isolationsversagens der Wicklung).

Bei der Auslegung des Motors ist man gezwungen, einen Kompromiss zwischen Baugröße und Lastmoment einzugehen. Insbesondere dann, wenn der Motor praktisch dauerhaft unterhalb seines Nennmomentes betrieben wird und nur kurzzeitige Lastspitzen oberhalb auftreten, ist es wirtschaftlich sinnvoll, den Motor nicht auf die Lastspitzen, sondern auf den zu erwartenden Mittelwert zuzüglich Sicherheitsreserve auszulegen. Um eine unnötige Überdimensionierung zu vermeiden, ist es notwendig, die Motortemperatur zu ermitteln.

Bekannte Verfahren zur Ermittlung der Motortemperatur sind:
1. Nutzung eines eigenen Temperatursensors. Nachteilig hieran sind der zusätzliche Aufwand und die zusätzlichen Kosten für den Temperatursensor, die Verkabelung und die Signalaufbereitung.
2. Nutzung eines wärmetechnischen Modells (typischerweise Tiefpass). Durch Messung des Motorstroms und Nutzung eines Temperaturmodells (üblicherweise gebildet aus einem Tiefpass, in den der Wärmewiderstand und die Wärmekapazität eingehen) kann die Übertemperatur nachgebildet werden. Nachteilig ist, dass schwankende Einbauverhältnisse den Wärmewiderstand und somit die Genauigkeit des Modells beeinflussen. Das Modell bildet die Temperaturerhöhung nach, und falls keine Messung der tatsächlichen Umgebungstemperatur möglich ist, muss die zulässige Erwärmung auf die max. Umgebungstemperatur ausgelegt werden. Dies bedeutet, dass der Motor bei Temperaturen unterhalb des Maximalwertes nicht mehr voll ausgenutzt wird.
3. Messung des Spulenwiderstands und Bestimmung der Temperatur über Widerstandserhöhung. Diese Methode erfordert eine unbeeinflusste Spule (stehender Motor bzw. Spule nicht von Wechselfeldern durchsetzt) sowie dazugehörige Messeinrichtungen. Nachteilig hieran ist, dass die Methode nur bei bestimmten Motorbetriebszuständen möglich ist, da induzierte Spannungen oder Ströme das Ergebnis verfälschen.

Der Erfindung liegt die Aufgabe zugrunde, ein Verfahren und ein System zur Ermittlung einer Motortemperatur anzugeben, die die genannten Nachteile der bekannten Lösungen vermeidet.

Diese Aufgabe wird gelöst durch ein Verfahren zur Ermittlung einer Temperatur eines Motors mittels eines Beobachters,
- wobei von einer Steuerung Steuersignale an den Motor gegeben werden,
- wobei mittels zumindest eines Sensors zumindest ein Messwert vom Motor aufgenommen wird,
- wobei der Beobachter anhand von zumindest einem Steuersignal und zumindest einem Messwert einer Messgröße Modellwerte für Modellgrößen eines Modells des Motors berechnet,
- wobei der zumindest einen Messgröße jeweils eine Modellgröße entspricht,
- wobei der entsprechende Messwert und der jeweils entsprechende Modellwert auf eine Abweichung überprüft werden,
- wobei bei zumindest einer Abweichung zumindest ein Modellwert derart verändert wird, dass die zumindest eine Abweichung minimiert wird,
- wobei als zumindest eine Modellgröße, der keine Messgröße entspricht, eine Motorkonstante oder ein Wicklungswiderstand des Motors berechnet wird und
- wobei die Temperatur aus der Motorkonstanten und/oder dem Wicklungswiderstand bestimmt wird.

Die Aufgabe wird weiter gelöst durch ein System mit den in Anspruch 8 angegebenen Merkmalen.

Die Motortemperatur wird durch Einsatz eines Beobachters ermittelt. Der Beobachter arbeitet mit einer modellhaften Darstellung des Motors und vergleicht die Ergebnisse des Modells mit den tatsächlichen Systemreaktionen. Als Eingangsgrößen des Beobachters dienen die vorhandenen Mess- und Steuersignale, wie z.B. Soll- und Ist-Geschwindigkeit, Soll- und Ist-Beschleunigung, Spannung im Zwischenkreis, Spannung am Motor (über PWM-Verhältnis, PWM: Pulsweitenmodulation) oder Stromaufnahme des Motors. Der Beobachter rechnet dann mit einem Modell, welches das Systemverhalten nachbildet, eine theoretische Systemreaktion aus und vergleicht diese mit dem tatsächlichen Systemverhalten. Anschließend werden die Modellgrößen so angepasst, dass sich auf Dauer minimale Abweichungen zum tatsächlichen Verhalten ergeben. Als Modellgrößen dienen dabei eine Motorkonstante (z.B. C_phi oder k-Wert) oder ein Wicklungswiderstand, da sich die Motortemperatur durch eine Änderung dieser Größen bemerkbar macht und bei Kenntnis der zugrunde liegenden Kennlinien leicht bestimmt werden kann.

Dadurch werden praktisch alle Vorteile der vorhandenen Verfahren kombiniert, ohne dass deren Nachteile in Kauf genommen werden müssen. Es sind keine extra Sensoren und keine extra Messschaltungen erforderlich, das Verfahren adaptiert sich auf den konkreten Einbauort und schwankende Einsatzbedingungen und ermöglicht die Ermittlung der absoluten Temperatur ohne Messung der Umgebungstemperatur.

In einer vorteilhaften Form der Ausgestaltung wird bei Überschreiten eines ersten Grenzwertes für die Temperatur ein Warnsignal ausgegeben. Durch die Auslösung dieses Alarmsignals können rechtzeitig geeignete Gegenmaßnahmen eingeleitet werden.

In einer weiteren vorteilhaften Ausführungsform wird als zumindest eine Modellgröße, der keine Messgröße entspricht, ein Lastmoment des Motors berechnet. Selbstverständlich kann das Modell ohne Mehraufwand noch weitere Systemgrößen ermitteln, doch ist die Kenntnis des Lastmoments für den Motor von besonderer Bedeutung.

In einer weiteren vorteilhaften Ausführungsform werden dabei aus dem Lastmoment externe Kräfte, die auf den Motor wirken, abgeleitet. Diese können z.B. von einer Feder, Reibung, einer Türmasse, einem Gegengewicht oder von Blockierungen herrühren.

In einer weiteren vorteilhaften Ausführungsform wird mittels des Motors eine Tür angetrieben und generiert die Steuerung Fahrkurven für die Tür. Insbesondere bei Türantrieben können beispielsweise durch Blockierungen kurzzeitige Lastspitzen auftreten, die möglicherweise zu einer Überhitzung des Motors führen.

In einer weiteren vorteilhaften Ausführungsform werden dabei bei Überschreiten eines zweiten Grenzwertes für die Temperatur die Fahrkurven angepasst. Durch diese Anpassung kann die Steuerung zunächst versuchen, die drohende Überhitzung des Motors durch die geeignet geänderten Fahrkurven zu vermeiden. Selbstverständlich kann dabei der zweite Grenzwert auch gleich dem ersten Grenzwert gewählt werden.

In einer weiteren vorteilhaften Ausführungsform werden die Messwerte mittels einer Sensorsignalaufbereitung aufbereitet. Hierdurch können die den Sensorsignalen entsprechenden Messwerte beispielsweise in "modellgerechte" Messwerte umgewandelt werden.

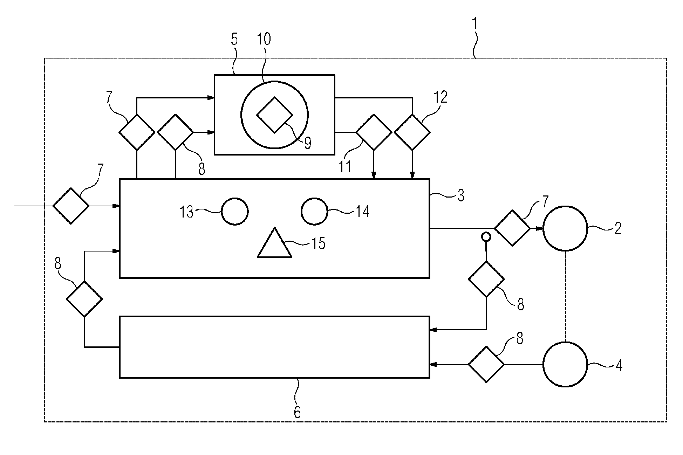

Im Folgenden wird die Erfindung anhand des in der Figur dargestellten Ausführungsbeispiels näher beschrieben und erläutert.

Die Figur zeigt:
ein Blockschaltbild eines erfindungsgemäßen Systems.

Die Figur zeigt ein Blockschaltbild eines erfindungsgemäßen Systems 1 aus einem Motor 2, einer Steuerung 3 zur Ansteuerung des Motors 2, einem Sensor 4 sowie einem Beobachter 5. Der Sensor 4 ist dabei z.B. als Drehzahlsensor ausgebildet und gibt den Messwert der Messgröße 8 Drehzahl an eine Sensorsignalaufbereitung 6 weiter. Als weitere Messgröße 8 kann zwischen Motor 2 und Steuerung 3 beispielsweise der Motorstrom gemessen werden. Von der Sensorsignalaufbereitung 6 werden die Messgrößen 8 (mit ihren jeweiligen Werten) an die Steuerung 3 weitergegeben. Die Steuerung 3, die von außen z.B. einen Fahrbefehl 7 für eine Tür als Steuersignal 7 erhält, gibt das Steuersignal 7 und die Messgrößen 8 an den Beobachter 5 weiter. Als Eingangsgrößen 7, 8 des Beobachters 5 dienen also ohnehin im System vorhandene Mess- 8 und Steuersignale 7, wie z.B. Soll- und Ist-Geschwindigkeit, Soll- und Ist-Beschleunigung, Spannung im Zwischenkreis, Spannung am Motor 2 (über PWM-Verhältnis) oder Stromaufnahme des Motors 2. Der Beobachter 5 rechnet dann mit einem Modell 10, welches das Systemverhalten nachbildet, eine theoretische Systemreaktion aus und vergleicht diese mit dem tatsächlichen Systemverhalten. Anschließend werden die Modellgrößen 9 so angepasst, dass sich auf Dauer minimale Abweichungen zum tatsächlichen Verhalten ergeben. Als Modellgrößen 9 können z.B. das Lastmoment 12, die Motorkonstante (C_phi oder k-Wert) und der Wicklungswiderstand dienen. Die Motortemperatur 11 macht sich durch eine Änderung der Motorkonstanten und/oder des Wicklungswiderstandes bemerkbar und kann bei Kenntnis der zugrunde liegenden Kennlinien leicht bestimmt werden.

Vorteilhafterweise kann das Modell 10 ohne Mehraufwand noch weitere Systemgrößen ermitteln, wie z.B. das Lastmoment 12. Aus diesem wiederum können auch externe Kräfte auf den Motor 2 abgeleitet werden, wie sie im Falle einer Türsteuerung beispielsweise von einer Feder, Reibung, der Türmasse, einem Gegengewicht oder von Blockierungen verursacht werden.

Überschreitet die Motortemperatur 11 einen ersten Grenzwert 13, so kann von der Steuerung 3 ein Alarm / Warnsignal 15 ausgegeben werden. Bei Überschreiten eines zweiten Grenzwertes 14 können im Falle eines Türantriebs auch die Fahrkurven angepasst werden. Beide Grenzwerte 13, 14 können dabei auch identisch sein, oder der zweite Grenzwert 14 kann kleiner als der erste 13 gewählt werden.

Durch das erfindungsgemäße Verfahren bzw. System 1 werden praktisch alle Vorteile der bekannten Lösungen kombiniert, ohne deren Nachteile in Kauf nehmen zu müssen. Insbesondere sind neben den ohnehin vorhandenen keine zusätzlichen Sensoren 4 erforderlich. Zudem adaptiert sich das Verfahren auf den jeweiligen Einbauort und ermöglicht die Ermittlung der absoluten Temperatur ohne Messung der Umgebungstemperatur.

Zusammenfassend betrifft die Erfindung ein Verfahren zur Ermittlung einer Temperatur eines Motors sowie ein System mit Mitteln zur Durchführung eines derartigen Verfahrens. Um die Motortemperatur zu ermitteln, wird vorgeschlagen, ohnehin vorhandene Mess- und Steuersignale als Eingangsgrößen für einen Beobachter zu verwenden, der aus diesen eine Motorkonstante oder den Wicklungswiderstand berechnet, woraus sich dann die Motortemperatur absolut bestimmen lässt.

## Patentansprüche

1. Verfahren zur Ermittlung einer Temperatur (11) eines Motors (2) mittels eines Beobachters (5),
• wobei von einer Steuerung (3) Steuersignale (7) an den Motor (2) gegeben werden,
• wobei mittels zumindest eines Sensors (4) zumindest ein Messwert vom Motor (2) aufgenommen wird,
• wobei der Beobachter (5) anhand von zumindest einem Steuersignal (7) und zumindest einem Messwert einer Messgröße (8) Modellwerte für Modellgrößen (9) eines Modells (10) des Motors (2) berechnet,
• wobei der zumindest einen Messgröße (8) jeweils eine Modellgröße (9) entspricht,
• wobei der entsprechende Messwert und der jeweils entsprechende Modellwert auf eine Abweichung überprüft werden,
• wobei bei zumindest einer Abweichung zumindest ein Modellwert derart verändert wird, dass die zumindest eine Abweichung minimiert wird,
• wobei als zumindest eine Modellgröße (9), der keine Messgröße (8) entspricht, eine Motorkonstante oder ein Wicklungswiderstand des Motors (2) berechnet wird und
• wobei die Temperatur (11) aus der Motorkonstanten und/oder dem Wicklungswiderstand bestimmt wird.

2. Verfahren nach Anspruch 1,
wobei bei Überschreiten eines ersten Grenzwertes (13) für die Temperatur (11) ein Warnsignal (15) ausgegeben wird.

3. Verfahren nach Anspruch 1 oder 2,
wobei als zumindest eine Modellgröße (9), der keine Messgröße (8) entspricht, ein Lastmoment (12) des Motors (2) berechnet wird.

4. Verfahren nach Anspruch 3,
wobei aus dem Lastmoment (12) externe Kräfte, die auf den Motor (2) wirken, abgeleitet werden.

5. Verfahren nach einem der vorhergehenden Ansprüche,
wobei mittels des Motors (2) eine Tür angetrieben wird und die Steuerung (3) Fahrkurven für die Tür generiert.

6. Verfahren nach Anspruch 5,
wobei bei Überschreiten eines zweiten Grenzwertes (14) für die Temperatur (11) die Fahrkurven angepasst werden.

7. Verfahren nach einem der vorhergehenden Ansprüche,
wobei die Messwerte mittels einer Sensorsignalaufbereitung (6) aufbereitet werden.

8. System (1) aus einem Motor (2), einer Steuerung (3), zumindest einem Sensor (4), einem Beobachter (5) sowie Mitteln zur Durchführung eines Verfahrens nach einem der vorherigen Ansprüche.
